# EUROPEAN PATENT APPLICATION

(11) **EP 4 663 549 A1**
(43) Date of publication of application: **17.12.2025**
(21) Application number: 25179955.7
(22) Date of filing: 30.05.2025
(51) Int. Cl.: B64D 37/04, B64D 37/06, B64D 37/30, F17C 13/08, B64C 7/00, B64C 1/00

(54) **TOP-FUSELAGE MOUNTED CRYOGENIC TANK**

(30) Priority: 12.06.2024 US 202463659039 P; 19.06.2024 US 202418747556
(71) Applicant: The Boeing Company, Arlington, VA 22202 (US)
(72) Inventor: KISSKA, MICHAEL K., Arlington, 22202 (US); ZIDOVETZKI, ESTHER SHIFRA, Arlington, 22202 (US); HOFFMAN, DREW CHRISTOPHER, Arlington, 22202 (US); OOMANDZAK, HTET HTET N., Arlington, 22202 (US); O'BRIEN, FAITH, Arlington, 22202 (US)
(74) Representative: Sandri, Sandro

(57) **Abstract**

A system and method for mounting a cryogenic tank on an aircraft. The system includes a tank support system connected to a crown region of a fuselage of an aircraft, a cryogenic tank connected to the tank support system, and a fairing encasing the tank support system and the cryogenic tank.

## Description

### CROSS-REFERENCE TO RELATED APPLICATIONS

This application claims the benefit of U.S. Provisional Patent Application Serial No. 63/659,039, filed June 12, 2024, and entitled "Cryogenic Tank Support System,".

This application is related to the following U.S. Patent Application: U.S. Patent Application Serial No. 18/747,556, filed June 19, 2024, Attorney Docket No. 23-2040-US-NP, and entitled "Top-Fuselage Mounted Cryogenic Tank".

### BACKGROUND INFORMATION

### 1. Field:

The present disclosure relates generally to aircraft. More specifically, the present disclosure relates to aircraft using propulsion systems powered using cleaner emission fuel alternatives, such as hydrogen, stored in fuel tanks mounted to the aircraft.

### 2. Background:

As traditional jet fuel prices or carbon taxes rise, when combined with climate change, there is more incentive over time to use alternative fuels for powering large commercial aircraft.

One such alternative fuel is hydrogen. Hydrogen is an essentially inexhaustible resource as the most abundant source of hydrogen is water. As a fuel source, hydrogen is stored in liquid form. Liquid hydrogen fuel needs to be stored at cryogenic temperatures. In order to provide enough fuel for an aircraft to perform normally, large onboard cryogenic tanks are required for each aircraft.

The packaging of the fuel tanks, the addition of hydrogen specific systems to the aircraft, and the impacts of various safety considerations to the aircraft provide unique issues when incorporating the use of alternate fuels stored in cryogenic fuel tanks.

Issues include storage and operation of the liquid hydrogen at cryogenic temperatures and how and where to attach the cryogenic tanks to the aircraft without upsetting the flight dynamics of the aircraft and without compromising the structural integrity of the aircraft.

Therefore, it would be desirable to have a method and apparatus that takes into account at least some of the issues discussed above, as well as other possible issues.

### SUMMARY

An illustrative embodiment of the present disclosure provides a system for mounting a cryogenic tank on an aircraft. The system includes a tank support system, a set of cryogenic tanks, and a fairing. The tank support system is connected to a fuselage of the aircraft. The set of cryogenic tanks is connected to the tank support system. The fairing is connected to a skin of the fuselage. The fairing also encases the tank support system and the set of cryogenic tanks.

Another illustrative embodiment of the present disclosure provides a liquid hydrogen aircraft with externally mounted cryogenic tanks. The aircraft includes a set of cryogenic tanks and a fairing. The fairing encases the set of cryogenic tanks. The fairing is also connected to the fuselage.

A further illustrative embodiment of the present disclosure provides a method for mounting a cryogenic tank on an aircraft. A tank support system is connected to a crown region of a fuselage of the aircraft. A set of cryogenic tanks is connected to the tank support system. A fairing is connected to the fuselage. The fairing encases the tank support system and the set of cryogenic tanks.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of a platform in accordance with an illustrative embodiment;
**Figure 2** is an illustration of an aircraft with a cryogenic tank in accordance with an illustrative embodiment;
**Figure 3** is an illustration of a set of cryogenic tanks and a tank support system in accordance with an illustrative embodiment;
**Figure 4** is an illustration of an aircraft with a cryogenic tank in accordance with an illustrative embodiment;
**Figure 5** is an illustration of an aircraft with a cryogenic tank in accordance with an illustrative embodiment;
**Figure 6** is an illustration of an aircraft with a cryogenic tank in accordance with an illustrative embodiment;
**Figure 7** is an illustration of a perspective view of a fairing in accordance with an illustrative embodiment;
**Figure 8** is an illustration of a side elevation view of a fairing in accordance with an illustrative embodiment;
**Figure 9** is an illustration of a top plan view of a fairing in accordance with an illustrative embodiment;
**Figure 10** is an illustration of a bottom plan view of a fairing in accordance with an illustrative embodiment;
**Figure 11** is an illustration of a perspective view of a fairing in accordance with an illustrative embodiment;
**Figure 12** is an illustration of a side elevation view of a fairing in accordance with an illustrative embodiment;
**Figure 13** is an illustration of a top plan view of a fairing in accordance with an illustrative embodiment;
**Figure 14** is an illustration of a bottom plan view of a fairing in accordance with an illustrative embodiment;
**Figure 15** is an illustration of a flowchart of a process for installing a cryogenic tank on an aircraft in accordance with an illustrative embodiment;
**Figure 16** is an illustration of an aircraft manufacturing and service method in accordance with an illustrative embodiment; and
**Figure 17** is an illustration of a block diagram of an aircraft in which an illustrative embodiment may be implemented.

### DETAILED DESCRIPTION

The illustrative embodiments recognize and take into account a number of different issues with respect to aircraft that operate using alternative fuel sources such as liquid hydrogen fuel. The issues recognized by the different illustrative embodiments are described herein.

The illustrative embodiments recognize and take into account that integrating a liquid hydrogen (LH2) system into a passenger aircraft, such as a large commercial aircraft, can be challenging. For example, design challenges are present in determining where to locate the large liquid hydrogen tanks safely and how to package the thermal management and fuel tank systems, both of which have large volume requirements.

In these illustrative examples, the location of the fuel tanks with respect to the fuselage and how the tanks are attached to the fuselage is described. The liquid hydrogen tanks are positioned above the fuselage and covered in an aerodynamic fairing. The illustrative embodiments recognize and take into account that this location saves wetted area by sharing a boundary with the fuselage skin and also keeps the hydrogen outside of the fuselage compartment which protects from hydrogen entrapment.

The illustrative embodiments recognize and take into account that this type of configuration can integrate the tanks in a safe manner while keeping the added weight of the tanks and liquid hydrogen therein from affecting the flight dynamics of the aircraft and structurally isolate the tanks from the structure of the aircraft. The top-fuselage attachment location of the cryogenic tanks also protects the tanks from hard landings. In one illustrative example, four cryogenic tanks are used to add redundancy and minimize sloshing.

The illustrative embodiments recognize and take into account that a keep out zone is provided between pairs of liquid hydrogen tanks to protect against rotor burst events on aircraft with wing mounted engines. The keep out zone is aligned with the engines of the aircraft.

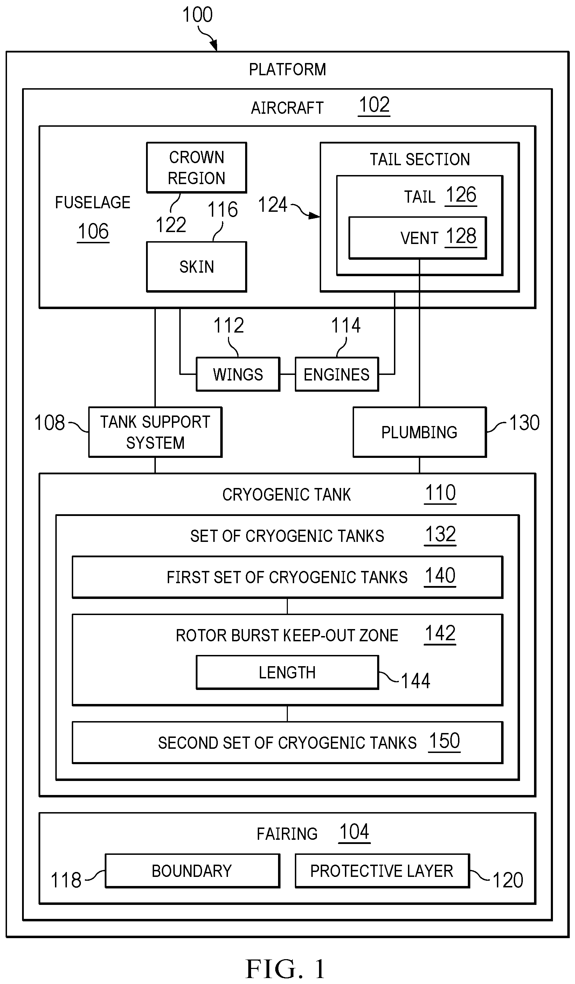

With reference now to the figures and, in particular, with reference to **Figure 1****,** an illustration of a block diagram of a platform is depicted in accordance with an illustrative example. Platform **100** has aircraft **102** in this illustrative example.

The illustration of aircraft **102** in **Figure 1** is not meant to imply physical or architectural limitations to the manner in which an illustrative example may be implemented. For example, although aircraft **102** may be a commercial aircraft, aircraft **102** may be a military aircraft, a rotorcraft, a helicopter, an unmanned aerial vehicle, or any other suitable aircraft.

Although the illustrative examples are described with respect to an aircraft, the illustrative example may be applied to other types of platforms. The platform may be, for example, a mobile platform, a stationary platform, a land-based structure, an aquatic-based structure, or a space-based structure. More specifically, the platform may be an aircraft, a surface ship, a tank, a personnel carrier, a train, a spacecraft, a space station, a satellite, a submarine, an automobile, a power plant, a bridge, a dam, a house, a manufacturing facility, a building, a tool, a mechanical structure, or some other suitable platform or structure where attachment of a cryogenic tank is desirable.

In this illustrative example, platform **100** takes the form of aircraft **102.** In this illustrative example, when platform **100** takes the form of aircraft **102,** aircraft **102** includes fuselage **106,** tank support system **108,** cryogenic tank **110,** and fairing **104.** Aircraft **102** further includes wings **112** and engines **114.**

Tank support system **108** connects cryogenic tank **110** to fuselage **106** of aircraft **102.** When tank support system **108** is used to connect cryogenic tank **110** to fuselage **106** of aircraft **102,** cryogenic tank **110** is structurally isolated from aircraft **102.** In other words, the connection of cryogenic tank **110** to aircraft **102** does not structurally affect fuselage **106.** Tank support system **108** carries radial loads and axial loads of cryogenic tank **110** at one end of cryogenic tank **110** while only carrying radial loads of cryogenic tank **110** and allowing axial expansion of cryogenic tank **110** relative to aircraft **102** at an opposite end of cryogenic tank **110.** As a result, the addition of tank support system **108** to connect cryogenic tank **110** to aircraft **102** does not compromise the structural rigidity and flexure of aircraft **102.** Any forces acting on the aircraft resulting from intended use of the aircraft are isolated from the cryogenic tank and any forces acting on the cryogenic tank are isolated from the aircraft. Fairing **104** is connected to fuselage **106.** Fairing **104** encases tank support system **108** and cryogenic tank **110** for aerodynamic purposes in order to keep complicated geometry out of the airflow and decrease the wetted area of aircraft **102** in use.

Fairing **104** is connected to skin **116** of fuselage **106.** Fairing **104** shares boundary **118** with skin **116** of fuselage **106.** Fairing **104** may also include protective layer **120.** Protective layer **120** helps prevent punctures or ruptures of any kind of fairing **104.** Protective layer **120,** for example, may be a mesh or may be comprised of Kevlar^{®} or aluminum. Protective layer **120** should add strength to fairing **104** without adding significant weight. Protective layer **120** can take the form of additional thickness at the forward section of fairing **104** to protect from bird strike. Protective layer **120** can take the form of additional shielding forward and aft of a rotor burst keep-out zone to protect from small fragments puncturing the fairing. Protective layer **120** can take the form of a metal mesh along the top of the fairing that helps protect the tanks from the electromagnetic effects of lighting strikes. An offset between the mesh and the tanks protects the tanks from the thermal effects.

As used herein, a first component "connected to" or "coupled to" or "associated with" a second component means that the first component can be connected directly or indirectly to the second component. The connection is a physical association. In other words, additional components may be present between the first component and the second component. The first component is considered to be indirectly connected to the second component when one or more additional components are present between the two components. When the first component is directly connected to the second component, no additional components are present between the two components.

For example, a first component can be considered to be physically connected to a second component by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

In this illustrative example, fuselage **106** includes crown region **122,** skin **116,** and tail section **124.** Skin **116** represents the outer layer of all the structural members that form fuselage **106.** Fuselage **106** includes crown region **122** located on the top of fuselage **106.** Tail section **124,** or empennage, is the arrangement of stabilizing surfaces at the tail of aircraft **102.** Aircraft **102** also includes wings **112** and engines **114.** Depending on the aircraft, engines **114** may be located on wings **112** or on tail section **124.**

Tail section **124** includes tail **126.** Tail **126** is a vertical stabilizing surface. Tail **126** includes vent **128.** Vent **128** may be located on the top of tail **126** but may also be located at other convenient protruding locations on the aircraft such as the tip of a horizontal stabilizer of a wing. Vent **128** is connected to cryogenic tank **110** through plumbing **130.** Vent **128** operates to alleviate excess tank pressure in the case that any abnormally high tank pressure is produced that poses a danger to tank integrity. Use of the vent is a failsafe in an abnormal case that should not occur in the normal operating of the aircraft and the conversion of LH2 to gaseous hydrogen (GH2) to power the engines.

Tank support system **108** is connected to fuselage **106** at crown region **122.** Tank support system **108** is connected to cryogenic tank **110.** Tank support system **108** structurally isolates cryogenic tank **110** from fuselage **106.**

The size and capacity of cryogenic tank **110** can be designed for the intended purpose of aircraft **102.** Cryogenic tank **110** may be more than one cryogenic tank, for example set of cryogenic tanks **132** may be necessary. Tank support system **108** can be configured to accommodate any number of cryogenic tanks and is not limited to a single cryogenic tank.

As used herein, a "set of," when used with reference to items, means one or more items. For example, a "set of cryogenic tanks" is one or more cryogenic tanks.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Set of cryogenic tanks **132** includes at least first set of cryogenic tanks **140** and second set of cryogenic tanks **150.** The Federal Aviation Administration (FAA) requires that design precautions must be taken to minimize the hazards to the airplane in the event of an engine rotor failure. As a result, set of cryogenic tanks **132** includes rotor burst keep-out zone **142.** In an illustrative example, rotor burst keep-out zone **142** may exist between first set of cryogenic tanks **140** and second set of cryogenic tanks **150.** Rotor burst keep-out zone **142** creates an empty space between first set of cryogenic tanks **140** and second set of cryogenic tanks **150** along crown region **122** of aircraft **102.** When engines **114** are mounted in wings **112,** rotor burst keep-out zone **142** is present between first set of cryogenic tanks **140** and second set of cryogenic tanks **150** to protect first set of cryogenic tanks **140** and second set of cryogenic tanks **150** from flying pieces of engines **114** in the case of a rotor burst event.

Rotor burst keep-out zone **142** has length **144.** Length **144** is the space between first set of cryogenic tanks **140** and second set of cryogenic tanks **150.** The FAA defines length **144** by the practices set in the FAA's Advisory Circular AC 20-128A for a given engine geometry installed at a given location. Length **144** of rotor burst keep-out zone **142** is defined by the estimated angles for rotor fragments released from a given location during a rotor burst event.

This geometry ensures that rotor burst keep-out zone **142** is sized properly to provide sufficient protection from large and intermediate fragments for first set of cryogenic tanks **140** and second set of cryogenic tanks **150** in the case of a rotor burst event.

Cryogenic tank **110** is a double-walled, insulated tank for storing liquid hydrogen at cryogenic temperatures. Cryogenic tank **110** may be set of cryogenic tanks **132.** Cryogenic tank **110** includes an inner wall separated from outer wall by a vacuum insulation layer. Cryogenic tank **110** is generally cylindrical in shape.

Tank support system **108** supports cryogenic tank **110** and connects cryogenic tank **110** to crown region **122** of fuselage **106** of aircraft **102.** Tank support system **108** structurally isolates cryogenic tank **110** from fuselage **106** of aircraft **102.** Tank support system **108** carries radial loads and axial loads of cryogenic tank **110** at one end of cryogenic tank **110** while only carrying radial loads of cryogenic tank **110** and allowing axial expansion of cryogenic tank **110** relative to aircraft **102** at an opposite end of cryogenic tank **110.** Because axial expansion of the cryogenic tank relative to the fuselage is allowed by tank support system **108,** forces acting on the aircraft are isolated from the cryogenic tank and forces acting on the cryogenic tank are isolated from the aircraft.

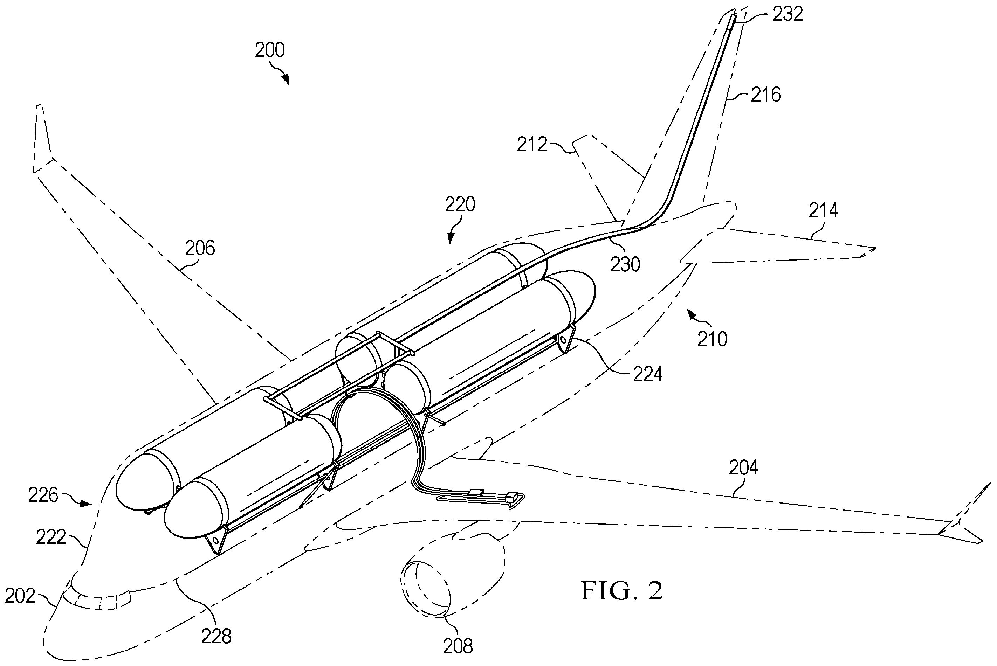

With reference next to **Figure 2****,** an illustration of an aircraft with cryogenic tanks connected to a crown region of the fuselage with a tank support system is depicted in accordance with an illustrative embodiment. In this illustrative example and the illustrative examples that follow, the same reference numeral may be used in more than one figure. This reuse of a reference numeral in different figures represents the same element in the different figures. The components illustrated in **Figure 2** are examples of physical implementations of aircraft **102,** fairing **104,** fuselage **106,** tank support system **108,** and set of cryogenic tanks **132** shown in block form in **Figure 1****.**

As illustrated, aircraft **200** includes fuselage **202.** Aircraft **200** has wing **204** and wing **206** connected to fuselage **202.** Aircraft **200** includes engine **208** connected to wing **204.** Another engine (not shown) is connected to wing **206.** Fuselage **202** has tail section **210.** Horizontal stabilizer **212,** horizontal stabilizer **214,** and tail **216** are connected to tail section **210** of fuselage **202.** Each tank of set of cryogenic tanks **220** is connected to crown region **222** of fuselage **202** with tank support system **224.** Tank support system **224** structurally isolates set of cryogenic tanks **220** from fuselage **202** of aircraft **200.** Fairing **226** is connected to fuselage **202.** Fairing **226** shares boundary **228** with the skin of fuselage **202.** Fairing **226** encases tank support system **224** and set of cryogenic tanks **220** to improve aerodynamics and decrease the wetted area. Plumbing **230** connects set of cryogenic tanks **220** to vent **232.** Tail **216** has an increased volume over the vertical tail of an aircraft without a set of cryogenic tanks connected to the crown region of the fuselage. The increased volume of tail **216** is necessary due to airflow interference from fairing **226.**

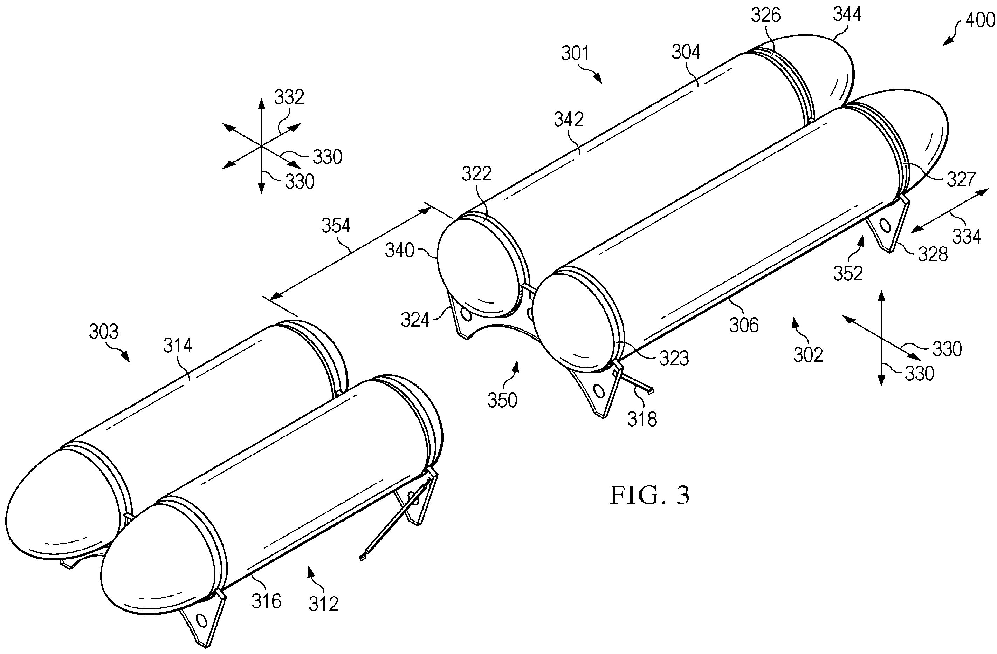

With reference next to **Figure 3****,** an illustration of a set of cryogenic tanks connected to a tank support system in accordance with an illustrative example. The components illustrated in **Figures 3-4** are examples of physical implementations of tank support system **108** and cryogenic tank **110** shown in block form in **Figure 1****.** Tank support system **302** connects first set of cryogenic tanks **301** comprising cryogenic tank **304** and cryogenic tank **306** to aircraft **308.** Tank support system **312** connects second set of cryogenic tanks **303** comprising cryogenic tank **314** and cryogenic tank **316** to aircraft **308.**

Tank support system **302** includes first support collar **322** and first support collar **323.** First support collar **322** and first support collar **323** are each connected to first saddle bracket **324.** Strut **318** is connected to first saddle bracket **324** and aircraft **308.** Tank support system **302** includes second support collar **326** and second support collar **327.** Second support collar **326** and second support collar **327** are each connected to second saddle bracket **328.**

Tank support system **302** carries radial loads **330** and axial loads **332** of cryogenic tank **304** and cryogenic tank **306** at end **350** of tank support system **302.** Tank support system **302** only carries radial loads **330** of cryogenic tank **304** and cryogenic tank **306** at end **352** of tank support system **302** while allowing axial expansion **334** of cryogenic tank **304** and cryogenic tank **306** at end **352** of tank support system **302** relative to aircraft **308.** Because axial expansion of the cryogenic tank relative to the fuselage is allowed by tank support system **302,** forces acting on the aircraft are isolated from the cryogenic tanks and forces acting on the cryogenic tanks are isolated from the aircraft.

Tank support system **312** has the exact same setup but in a mirrored orientation from tank support system **302.** As a result, description of tank support system **312** will not be described further.

Rotor burst keep-out zone **354** is present between first set of cryogenic tanks **301** and second set of cryogenic tanks **303.**

Each cryogenic tank **304, 306, 314,** and **316** is a double-walled, vacuum layer insulated cryogenic tank. Each tank is comprised of an inner wall spaced from an outer wall by a vacuum insulation layer. Each cryogenic tank is comprised of three sections, for example, cryogenic tank **304** includes end dome **340** connected to cylindrical body **342** connected to nose dome **344.** End dome **340** is connected to cylindrical body **342** by, for example, first support collar **322.** Cylindrical body **342** is connected to nose dome **344** by, for example, second support collar **326.**

The inner ring of the support collar is connected to the inner wall of the cryogenic tank. The inner ring is either welded or co-bonded directly to the inner wall of the cryogenic tank to avoid tank penetration with standard mechanical fasteners. The outer ring of the support collar is connected to the outer wall of the cryogenic tank. As a result, not only does the tank support system connect the cryogenic tanks to fuselage of aircraft, in this illustrative example, first support collar **322** and second support collar **326** support the inner wall of cryogenic tank **304** within the outer wall of cryogenic tank **304.** In other words, the support collars keep the outer wall of the cryogenic tank spaced from the inner wall of the cryogenic tank. As a result, a vacuum insulation layer between the inner wall and the outer wall remains uncompromised and provides a cryogenic temperature insulation layer.

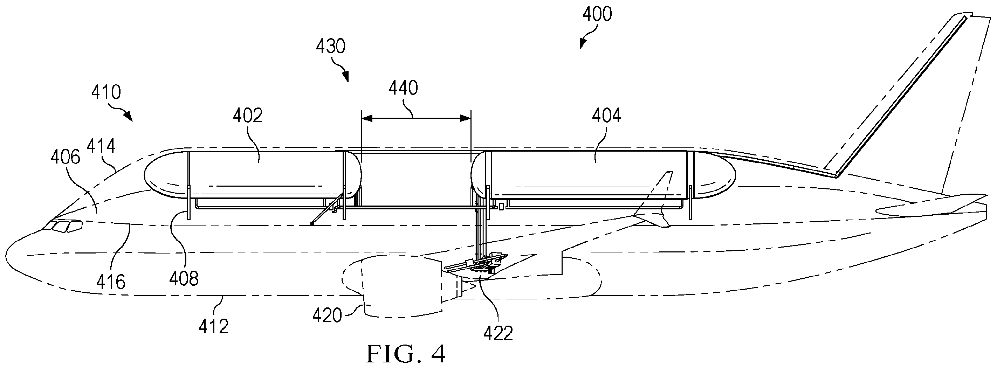

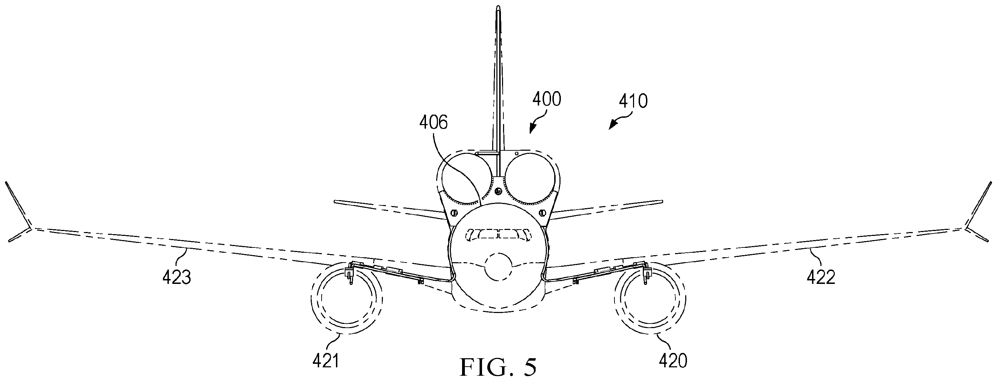

With reference next to **Figures 4-5****,** illustrations of an aircraft with a cryogenic tank attached to the crown region of the fuselage is depicted in accordance with an illustrative embodiment. The components illustrated in **Figures 4-5** are examples of physical implementations of set of cryogenic tanks **132** shown in block form in **Figure 1****.**

Set of cryogenic tanks **400** is connected to crown region **406** of fuselage **412** of aircraft **410** with tank support system **408.** Tank support system **408** is connected to crown region **406.** Tank support system is connected to set of cryogenic tanks **400.** Aircraft **410** includes engines **420** and **421** mounted to wings **422** and **423.**

Set of cryogenic tanks **400** includes first set of cryogenic tanks **402** and second set of cryogenic tanks **404.** Rotor burst keep-out zone **430** exists between first set of cryogenic tanks **402** and second set of cryogenic tanks **404.** Rotor burst keep-out zone **430** creates empty space between first set of cryogenic tanks **402** and second set of cryogenic tanks **404** along crown region **406** of aircraft **410.** Rotor burst keep-out zone **430** is present to protect first set of cryogenic tanks **402** and second set of cryogenic tanks **404** from flying pieces of engine in the case of a rotor burst event. During a rotor burst event, it is possible that pieces of the engines' turbomachinery may have sufficient energy to pierce through the cryogenic tanks. As a result, the best protection for the tanks from this possible exposure is to locate the tanks elsewhere, for example, out of a keep-out zone. Rotor burst keep-out zone **430** is aligned with engines **420** and **421.**

Rotor burst keep-out zone **430** has length **440.** Length **440** is the space between first set of cryogenic tanks **402** and second set of cryogenic tanks **404.** Length **440** is defined by the FAA for a given engine geometry installed at a given location. Length **440** of rotor burst keep-out zone **430** is defined by the estimated angles for rotor fragments released from a given location during a rotor burst event. This geometry, regulated by the FAA, ensures that rotor burst keep-out zone **430** is sized properly to provide sufficient protection for first set of cryogenic tanks **402** and second set of cryogenic tanks **404** in the case of a rotor burst event.

Fairing **414** is connected to fuselage **412** of aircraft **410.** Fairing **414** shares boundary **416** with the skin of fuselage **412.** Fairing **414** encases tank support system **408** and set of cryogenic tanks **400.**

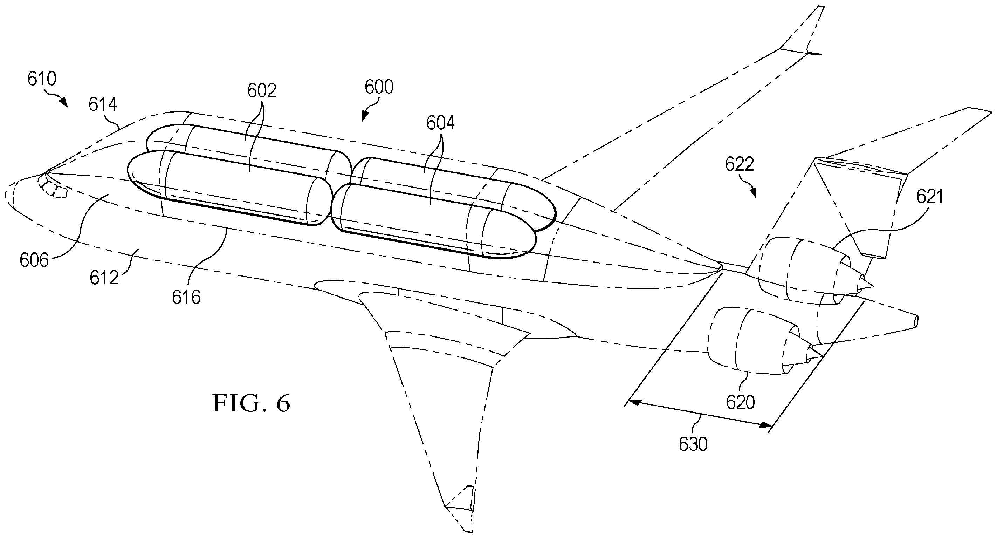

With reference next to **Figure 6****,** an illustration of an aircraft with a cryogenic tank attached to the crown region of the fuselage is depicted in accordance with an illustrative embodiment. The components illustrated in **Figure 6** are examples of physical implementations of set of cryogenic tanks **132** shown in block form in **Figure 1****.**

Set of cryogenic tanks **600** is connected to crown region **606** of fuselage **612** of aircraft **610** with a tank support system. Aircraft **610** includes engines **620** and **621** mounted to tail section **622** of aircraft **610.**

Set of cryogenic tanks **600** includes first set of cryogenic tanks **602** and second set of cryogenic tanks **604.** In contrast to set of cryogenic tanks **400** depicted in **Figure 4****,** no significant gap exists between first set of cryogenic tanks **602** and second set of cryogenic tanks **604.** However, rotor burst keep-out zone **630** for the engines still exists. Rotor burst keep-out zone **630** is aligned with engines **620** and **621.** Rotor burst keep-out zone **630** creates empty space over engines **620** and **621** along crown region **606** of aircraft **610.** Rotor burst keep-out zone **630** is present to protect first set of cryogenic tanks **602** and second set of cryogenic tanks **604** from flying pieces of engine in the case of a rotor burst event.

Fairing **614** is connected to fuselage **612** of aircraft **610.** Fairing **614** shares boundary **616** with the skin of fuselage **612**. Fairing **614** encases set of cryogenic tanks **600** and a tank support system that connects set of cryogenic tanks **600** to the crown region of fuselage **612**.

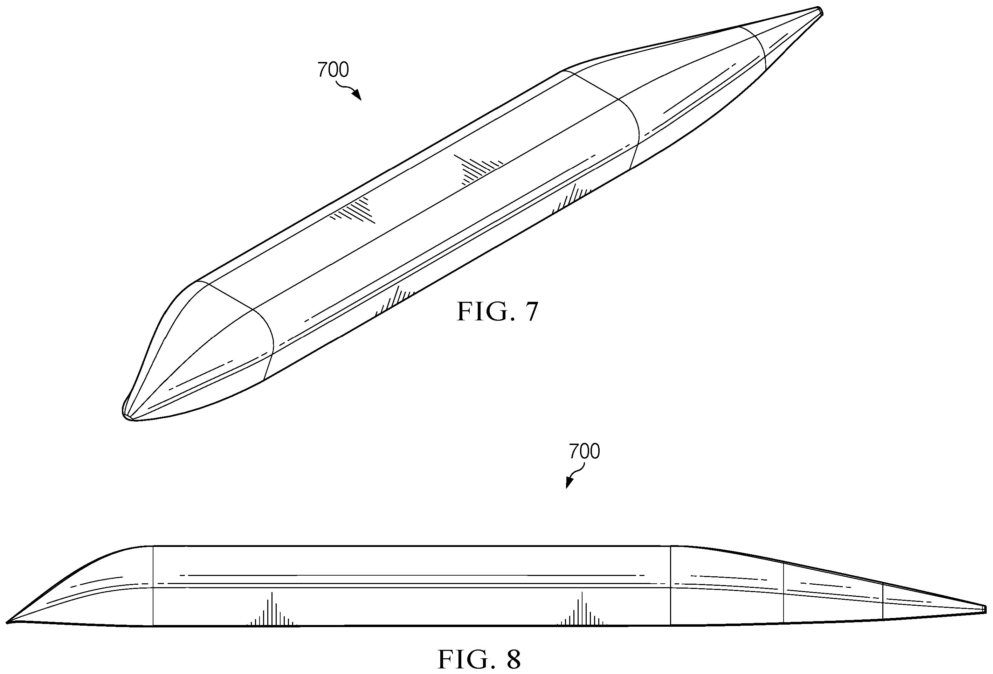

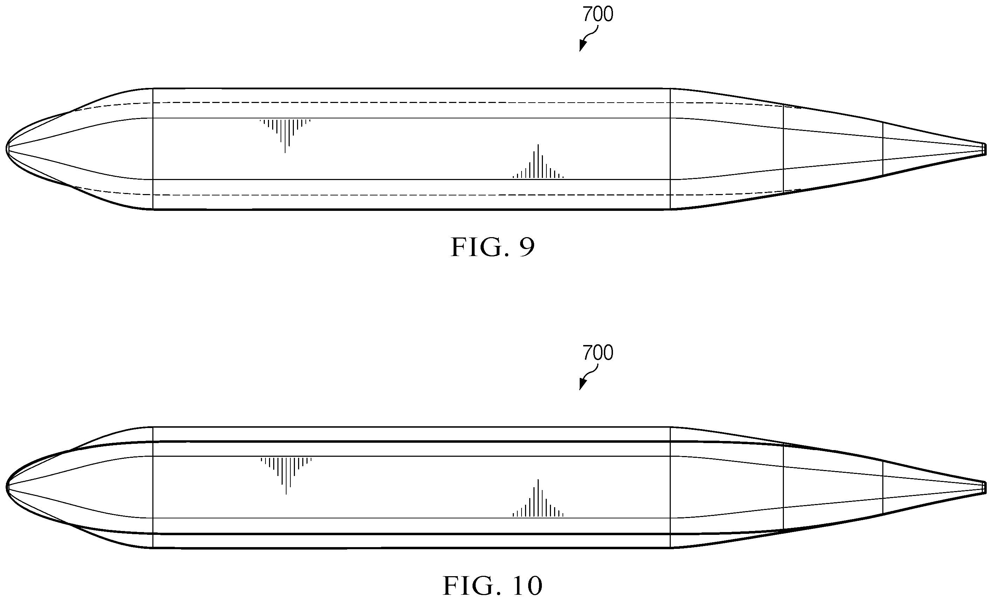

With reference next to **Figures 7-10****,** illustrations of a fairing for encasing a cryogenic tank and a tank support system attached to the crown region of a fuselage of an aircraft is depicted in accordance with an illustrative embodiment. The components illustrated in **Figures 7-10** are examples of physical implementations of set of fairing **104** shown in block form in **Figure 1****.** In this illustrative example, the engines of the aircraft are located on the wings of the aircraft extending from the fuselage.

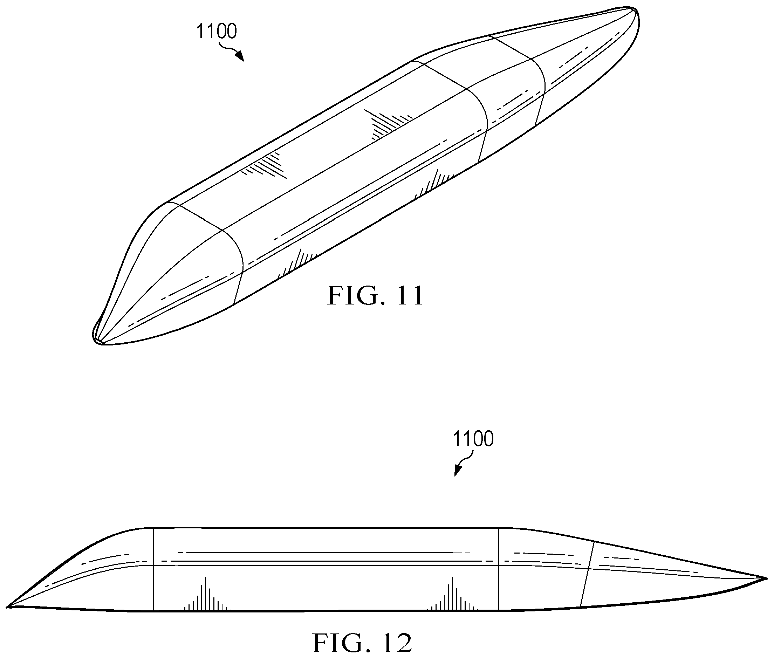

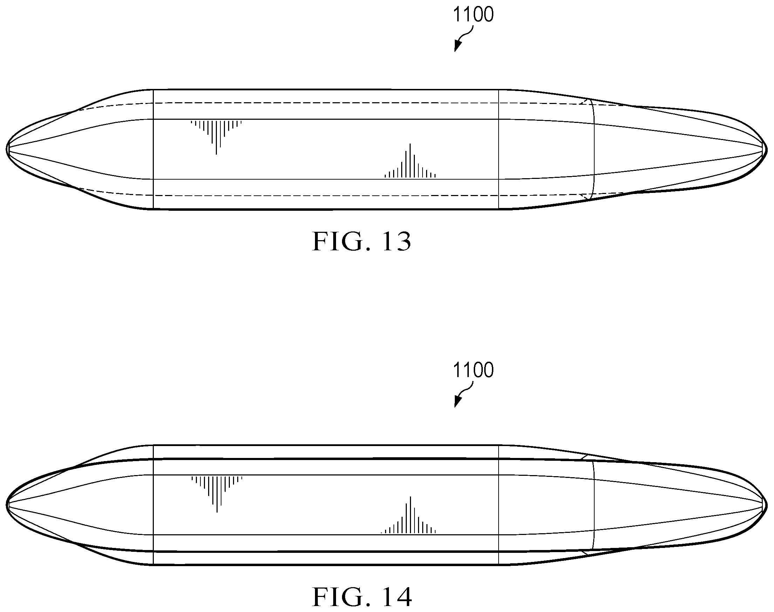

With reference next to **Figures 11-14****,** illustrations of a fairing for encasing a cryogenic tank and a tank support system attached to the crown region of the fuselage is depicted in accordance with an illustrative embodiment. The components illustrated in **Figures 11-14** are examples of physical implementations of set of fairing **104** shown in block form in **Figure 1****.** In this illustrative example, the engines of the aircraft are located on the tail section of the aircraft.

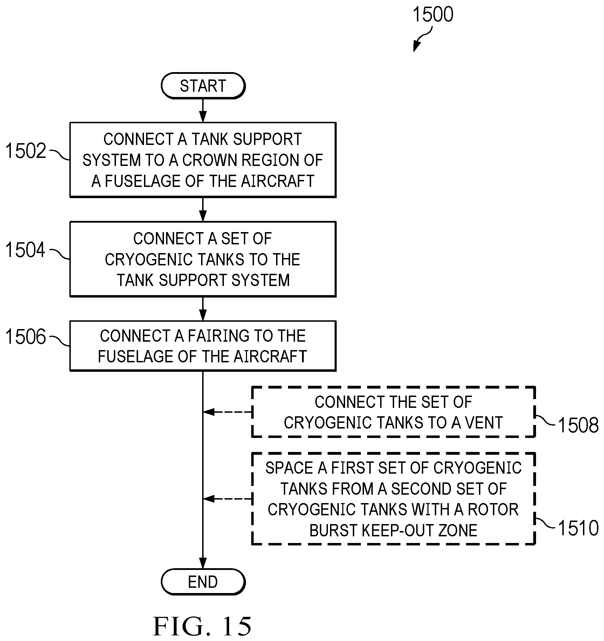

With reference next to **Figure 15****,** an illustration of a flowchart of a process **1500** for mounting a cryogenic tank on an aircraft is depicted in accordance with an illustrative embodiment. The method depicted in **Figure 15** may be used in conjunction with the tank support system, the cryogenic tank, and the fairing depicted in **Figures 1-14****.**
The process begins by connecting a tank support system to a crown region of a fuselage of the aircraft (operation **1502).** The process continues by connecting a set of cryogenic tanks to the tank support system (operation **1504).** At operation **1506,** the process connects a fairing to the fuselage of the aircraft. The fairing encases the tank support system and the set of cryogenic tanks. At operation **1508,** the process connects the set of cryogenic tanks to a vent with tubing. In this example, the vent is located in a vertical tail of the aircraft, however, the vent could be located at other protruding locations such as the tip of a horizontal stabilizer or a wing. At operation **1510,** the set of cryogenic tanks comprises a first set of cryogenic tanks and a second set of cryogenic tanks. The process spaces the first set of cryogenic tanks from the second set of cryogenic tanks with a rotor burst keep-out zone. The rotor burst keep-out zone is aligned with engines mounted to wings of the aircraft.

In some alternative implementations of an illustrative example, the function or functions noted in the blocks may not be necessary or may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

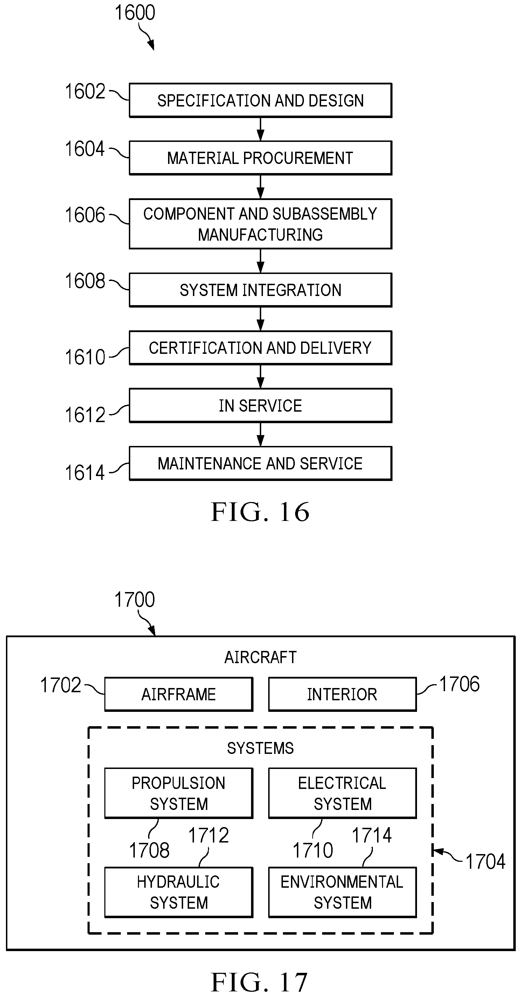

The illustrative embodiments of the disclosure may be further described in the context of aircraft manufacturing and service method **1600** as shown in **Figure 16** and aircraft **1700** as shown in **Figure 17****.** Turning first to **Figure 16****,** an illustration of a block diagram of an aircraft manufacturing and service method is depicted in accordance with an illustrative embodiment. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** may go through certification and delivery **1610** in order to be placed in service **1612.** While in service **1612** by a customer, aircraft **1700** in **Figure 17** is scheduled for routine maintenance and service **1614,** which may include modification, reconfiguration, refurbishment, and other maintenance, service, or inspection.

The apparatus of this disclosure may be installed on an aircraft during component and subassembly manufacturing **1606.** In addition, the apparatus of this disclosure may be retrofitted onto aircraft **1700** in **Figure 17** during routine maintenance and service **1614** as part of a modification, reconfiguration, or refurbishment of aircraft **1700** in **Figure 17****.**

Each of the processes of aircraft manufacturing and service method **1600** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers, and an operator may be an airline, a leasing company, a military entity, a service organization, and so on.

With reference now to **Figure 17****,** an illustration of a block diagram of an aircraft is depicted in which an illustrative embodiment may be implemented. In this example, aircraft **1700** is produced by aircraft manufacturing and service method **1600** in **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1600** in **Figure 16****.** In one illustrative example, components or subassemblies produced in component and subassembly manufacturing **1606** in **Figure 16** may be fabricated or manufactured in a manner similar to components or subassemblies produced while aircraft **1700** is in service **1612** in **Figure 16****.** As yet another example, one or more apparatus embodiments, method embodiments, or a combination thereof may be utilized during production stages, such as component and subassembly manufacturing **1606** and system integration **1608** in **Figure 16****.** One or more apparatus embodiments, method embodiments, or a combination thereof may be utilized while aircraft **1700** is in service **1612,** during maintenance and service **1614,** inclusive of inspection, in **Figure 16****,** or both. The use of a number of the different illustrative embodiments may substantially expedite the assembly of aircraft **1700,** reduce the cost of aircraft **1700,** or both expedite the assembly of aircraft **1700** and reduce the cost of aircraft **1700.**

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Further, the disclosure provides aspects according to the following clauses:
Clause 1. A system for mounting a cryogenic tank to an aircraft, comprising:
   a tank support system connected to a fuselage of the aircraft;
   a set of cryogenic tanks connected to the tank support system; and
   a fairing encasing the tank support system and the set of cryogenic tanks, the fairing connected to and sharing a boundary with a skin of the fuselage.
Clause 2. The system of clause 1, wherein the tank support system and the set of cryogenic tanks are located on a crown region of the fuselage.
Clause 3. The system of clause 1, wherein the tank support system and the set of cryogenic tanks are located on a crown region of the fuselage and engines of the aircraft are mounted to a tail section of the fuselage.
Clause 4. The system of clause 1, wherein the set of cryogenic tanks comprises a first set of cryogenic tanks and a second set of cryogenic tanks, further comprising a rotor burst keep-out zone between the first set of cryogenic tanks and the second set of cryogenic tanks, wherein the rotor burst keep-out zone is aligned with engines mounted to wings of the aircraft.
Clause 5. The system of clause 4, wherein a length of the rotor burst keep-out zone is defined by estimated angles for rotor fragments released from a given location during a rotor burst event.
Clause 6. The system of clause 1, further comprising plumbing connected to the set of cryogenic tanks and leading to a vent located in a top of a vertical tail of the aircraft.
Clause 7. The system of clause 1, wherein a vertical tail of the aircraft includes a vent connected to the set of cryogenic tanks and wherein a volume of the vertical tail is greater than a volume of a traditional vertical tail.
Clause 8. The system of clause 1, wherein the set of cryogenic tanks comprises four individual cryogenic tanks connected to a crown region of the fuselage by the tank support system.
Clause 9. The system of clause 1, wherein the tank support system and the set of cryogenic tanks are connected to a crown region of the fuselage, wherein the set of cryogenic tanks comprises a first set of cryogenic tanks and a second set of cryogenic tanks, and wherein a rotor burst keep-out zone aligned with engines mounted to wings of the aircraft exists between the first set of cryogenic tanks and the second set of cryogenic tanks.
Clause 10. A liquid hydrogen aircraft with externally mounted cryogenic tanks, comprising:
   a set of cryogenic tanks connected to a crown region of a fuselage of the aircraft; and
   a fairing encasing the set of cryogenic tanks and
   connected to the fuselage.
Clause 11. The aircraft of clause 10, further comprising:
   a tank support system connected to the fuselage and the set of cryogenic tanks, wherein the tank support system is encased within the fairing.
Clause 12. The aircraft of clause 10, wherein engines of the aircraft are mounted to a tail section of the fuselage.
Clause 13. The aircraft of clause 10, wherein the set of cryogenic tanks comprises a first set of cryogenic tanks and a second set of cryogenic tanks, further comprising a rotor burst keep-out zone between the first set of cryogenic tanks and the second set of cryogenic tanks, wherein the rotor burst keep-out zone is aligned with engines mounted to wings of the aircraft.
Clause 14. The aircraft of clause 13, wherein a length of the rotor burst keep-out zone is defined by estimated angles for rotor fragments released from a given location during a rotor burst event.
Clause 15. The aircraft of clause 10, further comprising plumbing connected to the set of cryogenic tanks and leading to a vent located in a top of a vertical tail of the aircraft.
Clause 16. The aircraft of clause 10, wherein a vertical tail of the aircraft includes a vent connected to the set of cryogenic tanks and wherein a volume of the vertical tail is greater than a volume of a vertical tail of a non-liquid hydrogen aircraft.
Clause 17. The aircraft of clause 10, wherein the set of cryogenic tanks comprises four individual cryogenic tanks connected to the crown region of the fuselage by a tank support system and wherein the tank support system provides structural isolation between the set of cryogenic tanks and the fuselage of the aircraft.
Clause 18. A method for mounting a cryogenic tank on an aircraft, comprising:
   connecting a tank support system to a crown region of a fuselage of the aircraft;
   connecting a set of cryogenic tanks to the tank support system; and
   connecting a fairing to the fuselage of the aircraft, wherein the fairing encases the tank support system and the set of cryogenic tanks.
Clause 19. The method of clause 18, further comprising:
   connecting the set of cryogenic tanks to a vent with plumbing, the vent located in a vertical tail of the aircraft.
Clause 20. The method of clause 18, wherein the set of cryogenic tanks comprises a first set of cryogenic tanks and a second set of cryogenic tanks and further comprising:
   spacing the first set of cryogenic tanks from the second set of cryogenic tanks with a rotor burst keep-out zone, wherein the rotor burst keep-out zone is aligned with engines mounted to wings of the aircraft.

## Claims

1. A system for mounting a cryogenic tank to an aircraft, comprising:
a tank support system (108) connected to a fuselage (106) of the aircraft (102);
a set of cryogenic tanks (132) connected to the tank support system (108); and
a fairing (104) encasing the tank support system (108) and the set of cryogenic tanks (132), the fairing (104) connected to and sharing a boundary (118) with a skin (116) of the fuselage (106).

2. The system of claim 1, wherein the tank support system (108) and the set of cryogenic tanks (132) are located on a crown region (122) of the fuselage (106).

3. The system of any one of the preceding claims, wherein engines (114) of the aircraft (102) are mounted to a tail section (124) of the fuselage (106).

4. The system of any one of claims 1-2, wherein engines (114) of the aircraft are mounted to wings (112) of the aircraft (102).

5. The system of claim 4, wherein the set of cryogenic tanks (132) comprises a first set of cryogenic tanks (140) and a second set of cryogenic tanks (150), further comprising a rotor burst keep-out zone (142) between the first set of cryogenic tanks (132) and the second set of cryogenic tanks (150), wherein the rotor burst keep-out zone (142) is aligned with the engines (114) mounted to wings (112) of the aircraft (102).

6. The system of any one of claims 1-3, wherein the set of cryogenic tanks (132) comprises a first set of cryogenic tanks (140) and a second set of cryogenic tanks (150), further comprising a rotor burst keep-out zone (142), the rotor burst keep-out zone (142) being aligned to the tail section (124) of the fuselage (106).

7. The system of any one of claims 5 and 6, wherein a length (144) of the rotor burst keep-out zone (142) is defined by estimated angles for rotor fragments released from a given location during a rotor burst event.

8. The system of any one of the preceding claims, further comprising plumbing (130) connected to the set of cryogenic tanks (132) and leading to a vent (128) located in a top of a vertical tail (126) of the aircraft (102).

9. The system of claim 8, wherein a volume of the vertical tail (126) is greater than a volume of a traditional vertical tail.

10. The system of any one of the preceding claims, wherein the set of cryogenic tanks (132) comprises four individual cryogenic tanks connected to a crown region (122) of the fuselage (106) by the tank support system (108).

11. The system of any one of claims 5-6, wherein a length (144) of the rotor burst keep-out zone (142) is defined by estimated angles for rotor fragments released from a given location during a rotor burst event.

12. A liquid hydrogen aircraft with externally mounted cryogenic tanks, comprising a system according to any one of claims 1-11.

13. A method for mounting a cryogenic tank on an aircraft, comprising:
connecting (1502) a tank support system (108) to a crown region (122) of a fuselage (106) of the aircraft (102);
connecting (1504) a set of cryogenic tanks (132) to the tank support system (108); and
connecting (1506) a fairing (104) to the fuselage (106) of the aircraft (102), wherein the fairing (104) encases the tank support system (108) and the set of cryogenic tanks (132).

14. The method of claim 13, further comprising:
connecting (1508) the set of cryogenic tanks (132) to a vent (128) with plumbing (130), the vent (128) located in a vertical tail (126) of the aircraft (102).

15. The method of any one of claims 13-14, wherein the set of cryogenic tanks (132) comprises a first set of cryogenic tanks (140) and a second set of cryogenic tanks (150) and further comprising:
spacing (1510) the first set of cryogenic tanks (140) from the second set of cryogenic tanks (150) with a rotor burst keep-out zone (142), wherein the rotor burst keep-out zone (142) is aligned with engines (114) mounted to wings (112) of the aircraft (102).
